# EUROPÄISCHE PATENTANMELDUNG

(11) **EP 3 135 524 A1**
(43) Veröffentlichungstag der Anmeldung: **01.03.2017**
(21) Anmeldenummer: 16001373.6
(22) Anmeldetag: 18.06.2016
(51) Int. Cl.: B60K 15/05

(54) **TANKANSCHLUSS EINES KRAFTFAHRZEUGES**

(30) Priorität: 15.08.2015 CH 11912015
(71) Anmelder: Kunststoff Schwanden AG, 8762 Schwanden (CH)
(72) Erfinder: Saimen, Ackermann, CH-8753 Mollis (CH)
(74) Vertreter: Quehl, Horst Max

(57) **Zusammenfassung**

Der Tankanschluss (1) eines Kraftfahrzeuges hat eine in einer Karosserieöffnung des Fahrzeuges abgedichtet zu fixierende Anschlussmulde, in der eine Aufnahmeöffnung für den Endstutzen eines Fahrzeugtankes oder für den Endbereich eines elektrischen Anschlussteckers vorgesehen ist, und einen die Anschlussmulde verschliessenden Muldendeckel (3). Dieser ist mit einem gekrümmten Scharnierarm (4) in einem seitlich an die Anschlussmulde (2) angeformten Scharniergehäuse (6) um eine Scharnierachse (7) gelagert und durch eine im Bereich der Scharnierachse (7) vorgesehene, einer Schliessbewegung entgegen wirkende Feder (8) in geöffneter Position gehalten. An der dem Scharniergehäuse (6) gegenüberliegenden Seite der Anschlussmulde (2) sind fernauslösbare Verriegelungsmittel vorgesehen, um den Muldendeckel (3) in geschlossener Position entgegen der Kraft dieser Feder (8) zu halten. Dadurch, dass im Scharniergehäuse (6) oder am gekrümmten Scharnierarm (4) in mindestens einem zum Anschlag gelangenden Bereich mindestens ein Dämpfungskörper (11) vorgesehen ist, werden aufwändige, mit der Scharnierachse (7) verbundene Bremsmittel für den Muldendeckel (3) vermieden.

## Beschreibung

Die Erfindung betrifft einen Tankanschluss eines Kraftfahrzeuges, mit einer in einer Karosserieöffnung des Fahrzeuges abgedichtet zu fixierenden Anschlussmulde, in der eine Aufnahmeöffnung für den Endstutzen eines Fahrzeugtankes oder für den Endbereich eines elektrischen Anschlussteckers vorgesehen ist und mit einem die Anschlussmulde verschliessenden Muldendeckel, der mit einem gekrümmten Scharnierarm in einem seitlich an die Anschlussmulde angeformten Scharniergehäuse um eine Scharnierachse gelagert ist, wobei der Muldendeckel durch eine im Bereich der Scharnierachse vorgesehene, einer Schliessbewegung entgegen wirkende Feder, in geöffneter Position gehalten ist und an der dem Scharniergehäuse gegenüberliegenden Seite der Anschlussmulde fernauslösbare Verriegelungsmittel vorgesehen sind, für die Verriegelung des Muldendeckels in geschlossener Position entgegen der Kraft dieser Feder.

Ein derartiger Tankanschluss ist in seiner grundsätzlichen Gestaltung beispielsweise durch die DE102013021849 bekannt. Für die Verzögerung der durch Federkraft ausgelösten Öffnungsbewegung, nach Lösen einer Verriegelung des Muldendeckels, sind verschiedene im Bereich der Scharnierachse angeordnete Bremssysteme bekannt, deren Herstellung jedoch mit verhältnismässig grossem Aufwand verbunden ist. Beispiele hierfür sind durch die DE4323095 (Fig.5), die DE8404656 oder die DE10352445 bekannt. Durch solche Bremssysteme soll verhindert werden, dass sich der Muldendeckel nach Lösen seiner Verriegelung schlagartig bis zum Anschlag in geöffnete Position bewegt und folglich ein unangenehmes Geräusch erzeugt.

Der Erfindung liegt die Aufgabe zugrunde einen Tankanschluss der eingangs genannten Art zu finden, der bei verhältnismässig geringem Aufwand für seine automatisierte Herstellung in Kunststoffspritztechnik zwar eine schnelle Bewegung des Muldendeckels in geöffnete Position gewährleistet, dabei aber durch Dämpfung ein unangenehmes Schlaggeräusch vermeidet.

Die Lösung dieser Aufgabe erfolgt erfindungsgemäss dadurch, dass im Scharniergehäuse oder am gekrümmten Scharnierarm in mindestens einem zum Anschlag gelangenden Bereich mindestens ein Dämpfungskörper vorgesehen ist.

Um zu verhindern, dass durch einen derart angeordneten Dämpfungskörper der mögliche Öffnungswinkel des Muldendeckels verringert wird, ist in vorteilhafter Ausführungsform der Erfindung im konkaven Bereich der Krümmung des Scharnierarmes eine zum Anschlag im Scharniergehäuse bestimmte Erhebung und in deren Anschlagbereich im Scharniergehäuse eine Ausbuchtung vorgesehen und der Dämpfungskörper zwischen beiden angeordnet.

Weiterhin entspricht das Material des in der Ausbuchtung des Scharniergehäuses vorgesehenen Dämpfungskörpers vorzugsweise demjenigen einer sich unmittelbar an ihn anschliessenden, umlaufenden Dichtungslippe der Anschlussmulde, so dass seine Herstellung im Spritzgiessverfahren im selben Arbeitschritt mit der Herstellung des Dichtungsrandes erfolgen kann.

Weitere vorteilhafte Ausgestaltungen der Erfindung sind der folgenden Beschreibung anhand der Zeichnungen zu entnehmen.

Es zeigt:
Fig.1 eine perspektivische Darstellung einer Tankmulde mit ihrem Muldendeckel in geöffneter Position,
Fig.2 einen Längsschnitt durch die Tankmulde entsprechen ihrer Darstellung in Fig.1,
Fig.3 eine perspektivische Darstellung des Muldendeckels der Tankmulde nach Fig.1
Fig.4 eine Teildarstellung eines Längsschnittes durch die Tankmulde im Bereich des Scharnierarmes ihres Muldendeckels und
Fig.5 eine Teildarstellung eines Querschnittes durch die Tankmulde im Bereich des Scharnierarmes ihres Muldendeckels.

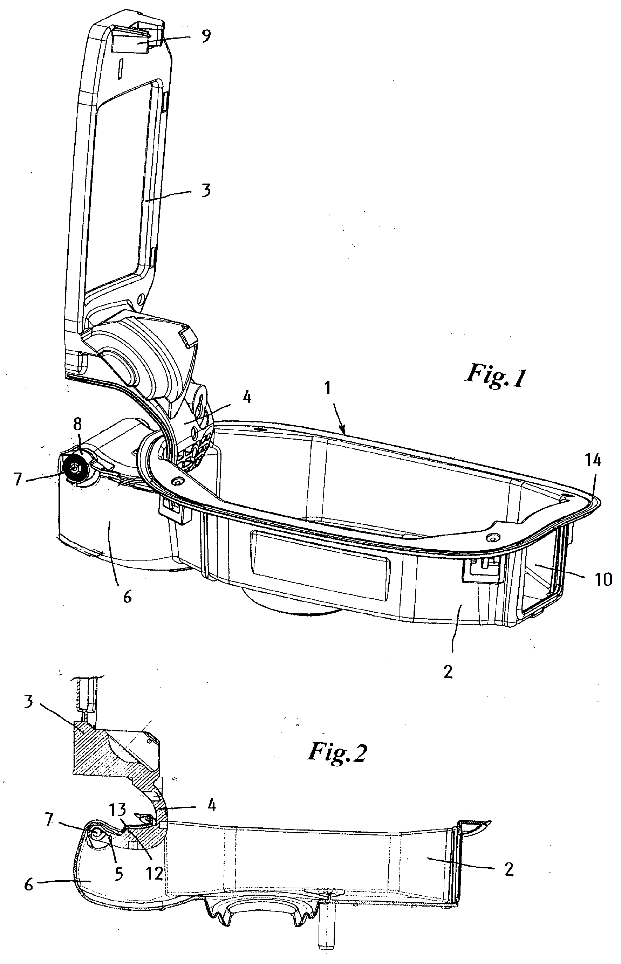

Wie die Darstellungen in Fig.1 und Fig.2 zeigen, hat der Tankanschluss 1 eine für das abgedichtete Einfügen in eine Karosserieöffnung und dabei Aufschieben auf einen Tankstutzen bestimmte Anschlussmulde 2 und einen an ihr angelenkten Muldendeckel 3.

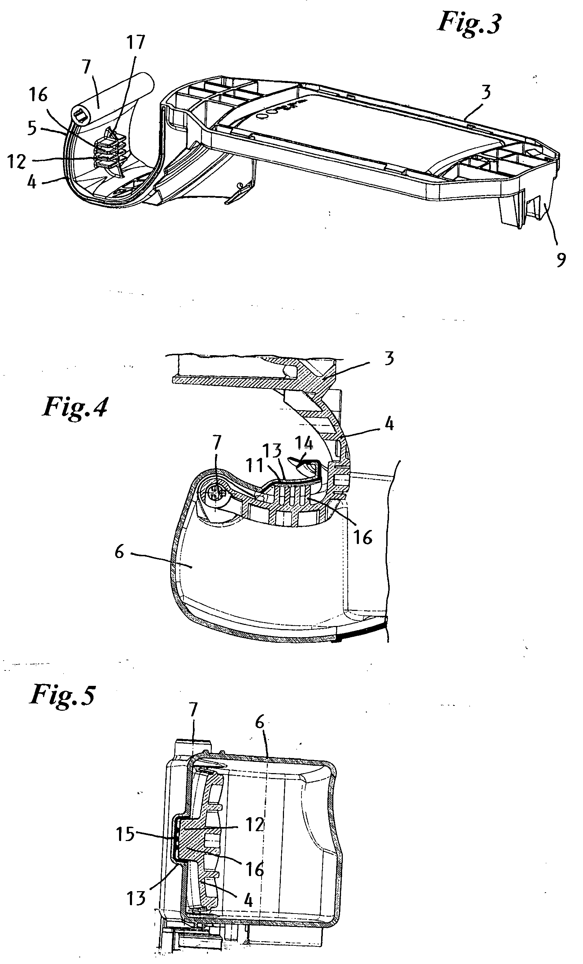

Für die ästhetische Anpassung an die Oberfläche eines Kraftfahrzeuges kann der Muldendeckel 3, entsprechend dem Ausführungsbeispiel nach Fig.3, als plattenförmiger, rippenverstärkter Deckelträger ausgeführt sein, auf dem, z.B. erst nachträglich, bei der Fahrzeugmontage, eine äshetische angepasste, nicht dargestellte Aussenplatte befestigt wird.

Damit die Anschlussmulde 2 bündig zur Karosserieoberfläche verschliessbar ist, hat der Muldendeckel 3 einen nahezu halbkreisförmig gekrümmten Scharnierarm 4, dessen freies Ende 5 in einem seitlich an die Anschlussmulde 2 angeformten Scharniergehäuse 6 um eine Scharnierachse 7 gelagert ist.

Das Öffnen der Anschlussmulde 2 erfolgt durch die Kraft einer um ihre Scharnierachse 7 angeordneten, z.B. aus einem flachen Stahlband gewickelten Torsionsfeder 8, nach Freigabe eines an ihrem freien Ende angeformten Verschlussteiles 9. Die Verriegelung dieses Verschlussteiles 9 erfolgt durch den Eingriff von fahrzeugseitig vorgesehenen, fernbetätigten Riegelmitteln, für die in der Anschlussmulde 2 eine endseitige Eingriffsöffnung 10 vorgesehen ist.

Um im Bereich der Schwenkachse 7 aufwändige Bremsmittel für die durch Federkraft ausgelöste Öffnungsbewegung des Muldendeckels 3 zu vermeiden, ist vorzugsweise im Scharniergehäuse 6 an geeigneter Stelle mindestens ein Dämpfungskörper 11 vorgesehen, so dass beim Öffnen des Muldendeckels 3 ein Bereich des gekrümmten Scharnierarmes 4 mit diesem in Kontakt gelangt.

Um zu verhindern, dass die Anordnung eines Dämpfungskörpers 11 in einem Bereich zwischen dem Scharnierarm 4 und dem Scharniergehäuse zu einer Einschränkung der Öffnungsweite des Muldendeckels 3 führt, ist der Dämpfungskörper 11 zwischen einer im konkaven Bereich der Krümmung des Scharnierarmes 4 angeformten Erhebung 12 und einer im Scharniergehäuse 6 ausgeformten Ausbuchtung 13 vorgesehen.

In bevorzugter Ausgestaltung der Erfindung ist dabei der Dämpfungskörper 11 in der Ausbuchtung 13 des Scharniergehäuses 6 eingeformt und schliesst sich unmittelbar an eine umlaufenden Dichtunglippe 14 der Anschlussmulde 2 an, so dass er mit dieser aus demselben zähelastischen Material besteht und seine Herstellung im Spritzgiessverfahren im selben Arbeitsschritt mit der Herstellung der Dichtungslippe 14 erfolgen kann.

Um seine zähelastische Verformbarkeit bei geringem Materialaufwand zu erhöhen, ist entsprechend der Darstellung in Fig.5, an der in Kontakt mit der Erhebung 12 des Scharnierarmes 4 gelangenden Seite des Dämpfungskörpers 11 eine durch Rippen 15 gebildete Profilierung vorgesehen.

Wie das Ausführungsbeispiel der Fig.3 und Fig.4 zeigt, kann die genannte, zum Eingriff in der Ausbuchtung 13 des Scharniergehäuses 6 bestimmte Erhebung 12 des Scharnierarmes 4, zur einfacheren kunststoffspritztechnischen Herstellung, aus mehreren, gemeinsam einen Eingriffsblock oder Stössel bildenden, zueinander parallelen Blockrippen 16 gebildet sein, die durch eine spritztechnisch vorteilhafte, mittige Rippe 17 miteinander verbunden sind. Dabei verlaufen die Blockrippen 16 bei geöffneter Anschlussmulde 2 senkrecht zu den Rippen 15 des Dämpfungskörpers 11, so dass sie bei der Dämpfungsbewegung senkrecht aufeinander treffen.

## Patentansprüche

1. Tankanschluss (1) eines Kraftfahrzeuges, mit einer in einer Karosserieöffnung des Fahrzeuges abgedichtet zu fixierenden Anschlussmulde (2), in der eine Aufnahmeöffnung für den Endstutzen eines Fahrzeugtankes oder für den Endbereich eines elektrischen Anschlussteckers vorgesehen ist und mit einem die Anschlussmulde (2) verschliessenden Muldendeckel (3), der mit einem gekrümmten Scharnierarm (4) in einem seitlich an die Anschlussmulde (2) angeformten Scharniergehäuse (6) um eine Scharnierachse (7) gelagert ist, wobei der Muldendeckel (3) durch eine im Bereich der Scharnierachse (7) vorgesehene, einer Schliessbewegung entgegen wirkende Feder (8) in geöffneter Position gehalten ist und an der dem Scharniergehäuse (6) gegenüberliegenden Seite der Anschlussmulde (2) fernauslösbare Verriegelungsmittel (9,10) vorgesehen sind, für die Verriegelung des Muldendeckels (3) in geschlossener Position entgegen der Kraft dieser Feder (8), **dadurch gekennzeichnet, dass** im Scharniergehäuse (6) oder am gekrümmten Scharnierarm (4) in mindestens einem zum Anschlag gelangenden Bereich mindestens ein Dämpfungskörper (11) vorgesehen ist.

2. Tankanschluss nach Anspruch 1, **dadurch gekennzeichnet, dass** im konkaven Bereich der Krümmung des Scharnierarmes (4) eine zum Anschlag im Scharniergehäuse (6) bestimmte Erhebung (12) und in deren Anschlagbereich im Scharniergehäuse (6) eine Ausbuchtung (13) vorgesehen und der Dämpfungskörper (11) zwischen beiden angeordnet ist.

3. Tankanschluss nach Anspruch 2, **dadurch gekennzeichnet, dass** der Dämpfungskörper (11) in der Ausbuchtung (13) des Scharniergehäuses (6) vorgesehen ist.

4. Tankanschluss nach Anspruch 3, **dadurch gekennzeichnet, dass** das Material des in der Ausbuchtung (13) des Scharniergehäuses (6) vorgesehenen Dämpfungskörpers (11) demjenigen einer sich unmittelbar an ihn anschliessenden, umlaufenden Dichtungslippe (14) der Anschlussmulde entspricht.

5. Tankanschluss nach Anspruch 3 oder 4, **dadurch gekennzeichnet, dass** an der in Kontakt mit der Erhebung (12) des Scharnierarmes (4) gelangenden Seite des Dämpfungskörpers (11) eine durch Rippen (15) gebildete Profilierung vorgesehen ist.

6. Tankanschluss nach Anspruch 3 und 5, **dadurch gekennzeichnet, dass** die Erhebung (12) des Scharnierarmes (4) aus mehreren, gemeinsam einen Eingriffsblock oder Stössel bildenden, zueinander parallelen Blockrippen (16) gebildet ist.

7. Tankanschluss nach Anspruch 6, **dadurch gekennzeichnet, dass** die Blockrippen (16) der Erhebung (12) durch eine mittige Rippe (17) miteinander verbunden sind.

8. Tankanschluss nach Anspruch 6, **dadurch gekennzeichnet, dass** die Blockrippen (16) der Erhebung (12) bei geöffneter Anschlussmulde (2) senkrecht zu den Rippen (15) des Dämpfungskörpers (11) verlaufen.
